# DEMANDE DE BREVET EUROPEEN

(11) **EP 2 113 411 A1**
(43) Date de publication de la demande: **04.11.2009**
(21) Numéro de dépôt: 09305355.1
(22) Date de dépôt: 27.04.2009
(51) Int. Cl.: B60N 3/10, B60R 7/04

(54) **Dispositif porte boisson pour console de véhicule automobile**

(30) Priorité: 28.04.2008 FR 0802377
(71) Demandeur: Renault, 92109 Boulogne Billancourt (FR)
(72) Inventeur: Chheang, Nakry, 78470 Saint Remy les Chèvreuses (FR); Gourdon, Stéphane, 75015 Paris (FR)

(57) **Abrégé**

La présente invention concerne un dispositif porte boisson pour console de véhicule automobile, comportant :
- un réceptacle (1) ménagée dans ladite console et présentant un fond (11) et une ouverture d'accès (12), opposée audit fond (11) et qui permet l'introduction d'un récipient contenant une boisson ;
- au moins un élément formant anneau (2), apte à entourer ledit récipient, ledit élément formant anneau (2) étant destiné à être porté d'une position de repos vers une position de travail dans laquelle il surplombe ledit fond (11), de manière à recevoir ledit récipient pour maintenir ledit récipient en appui sur ledit fond (11) ;

Selon l'invention, ledit élément formant anneau (2) est escamoté au niveau dudit fond (11), dans ladite position de repos.

## Description

La présente invention se rapporte à un dispositif porte-boisson, notamment à un dispositif porte boisson pour une console de véhicule automobile.

Le document US 2005/0224675 décrit un dispositif porte boisson qui comprend un réceptacle et un élément formant anneau apte à soutenir un récipient contenant une boisson. Le réceptacle comporte une ouverture d'accès, située au niveau de sa face supérieure et qui permet l'introduction du récipient dans le réceptacle. Le réceptacle peut être une console de véhicule automobile. L'élément formant anneau est mobile entre une position de repos, dans laquelle il affleure au niveau de l'ouverture d'accès du réceptacle, et une position de travail dans laquelle il est apte à recevoir le récipient. Dans la position de travail, selon les modes de réalisation, l'élément formant anneau est disposé, soit au-dessus de l'ouverture d'accès, ce qui permet de soutenir une bouteille, soit à côté de l'ouverture d'accès. Dans les deux cas, l'élément formant anneau est disposé en dehors du réceptacle, dans sa position de travail, ce qui rend le dispositif encombrant.

De plus, l'élément formant anneau devant être surélevé par rapport à l'ouverture du réceptacle, il est porté par un support qui est assez complexe. Lorsque l'élément formant anneau est fixé au droit de l'ouverture d'accès, le support vient se fixer, dans la position de travail, au niveau de l'ouverture d'accès, par un système du type baïonnette fort peu pratique à utiliser, en particulier lorsque l'utilisateur tient en main le récipient contenant la boisson.

Dans la position de repos, l'élément formant anneau étant disposé au niveau de l'ouverture du réceptacle, ce dernier ne peut plus être utilisé pour y déposer un objet quelconque. Seul un objet peu volumineux, tel qu'un crayon, peut être glissé dans l'ouverture formée par l'anneau. La console qui comporte un tel dispositif porte-boisson ne peut donc pas être utilisée en tant que vide poche, même lorsque le dispositif porte-boisson n'est pas utilisé.

Aussi, un problème qui se pose et que vise à résoudre la présente invention, est de proposer un dispositif porte boisson qui permet d'utiliser la console, notamment comme vide-poche, lorsque le dispositif porte-boisson n'est pas utilisé.

Dans ce but, la présente invention propose un dispositif porte-boisson pour console de véhicule automobile, ledit dispositif porte-boisson comportant :
- un réceptacle ménagé dans ladite console et présentant un fond et une ouverture d'accès, opposée audit fond et qui permet l'introduction d'un récipient contenant une boisson ;
- au moins un élément formant anneau apte à entourer ledit récipient, ledit élément formant anneau étant destiné à être porté d'une position de repos vers une position de travail dans laquelle il surplombe ledit fond, de manière à recevoir ledit récipient pour maintenir ledit récipient en appui sur ledit fond.

Selon l'invention, l'élément formant anneau est escamoté au niveau dudit fond, dans ladite position de repos. Ainsi, le réceptacle de la console peut être utilisé pour entreposer des objets, tels qu'un portefeuille, par exemple, ce qui est impossible avec le dispositif de l'art antérieur.

Selon un premier mode de réalisation, ledit élément formant anneau est amovible, ledit réceptacle présente une paroi latérale qui comporte :
- un rebord de soutien qui s'étend depuis ladite paroi latérale vers le centre dudit réceptacle,
- un orifice d'insertion ménagé au-dessus dudit rebord ; et
- une languette d'appui, solidaire dudit élément formant anneau et qui comporte un retour, sensiblement perpendiculaire à ladite languette et, dans ladite position de travail, ledit retour est disposé au-delà dudit orifice d'insertion et ladite languette d'appui prend appui sur ledit rebord de soutien.

Le retour de la languette permet de maintenir la languette sur le rebord d'appui en dépit des vibrations occasionnées par le mouvement du véhicule. La languette est très facile à insérer dans l'orifice, même d'une main. Ainsi, l'élément formant anneau peut être facilement porté dans sa position de travail.

Selon un second mode de réalisation, ledit réceptacle comporte :
- une paroi latérale qui présente une face externe et dans laquelle est ménagée une fente qui s'étend depuis ledit fond ; et ledit dispositif comporte, en outre,
- une tige de blocage, montée sur ledit élément formant anneau et qui traverse ladite fente, ladite tige de blocage présentant une première extrémité dépassant dudit élément formant anneau et orientée vers le centre dudit élément formant anneau et une seconde extrémité disposée au-delà de ladite fente, ladite seconde extrémité comportant une première portion d'appui qui prend appui sur ladite face externe de ladite paroi latérale, de part et d'autre de ladite fente ;
- des moyens élastiques qui maintiennent ladite première portion d'appui contre ladite face externe ; et
- une seconde portion d'appui, disposée sur ledit élément formant anneau de manière à pincer ladite paroi latérale entre ladite première et ladite seconde portion d'appui, moyennant quoi, ledit élément formant anneau est maintenu dans ladite position de travail par frottements.

Dans ce mode de réalisation, il existe une pluralité de positions de travail pour l'élément formant anneau, toutes disposées le long de la fente. Il est ainsi possible d'adapter la position de travail en fonction de la taille du récipient à maintenir dans le réceptacle.

Avantageusement, ledit dispositif comporte des moyens de guidage dudit élément formant anneau, le long de ladite fente.

Ces moyens de guidage peuvent comporter deux guides longitudinaux, disposés l'un de chaque côté de ladite fente et un élément de guidage, solidaire dudit élément formant anneau, traversé par ladite tige de blocage et qui coulisse entre lesdits guides.

Dans ce second mode de réalisation, la face externe de ladite paroi latérale peut également comporter au moins une paire d'éléments d'appui complémentaires qui sont disposés de part et d'autre de ladite fente et sur lesquels ladite première portion d'appui prend appui dans ladite position de travail, lesdits éléments d'appui complémentaires étant conformés de manière à permettre le passage de ladite première portion d'appui au-dessus desdits éléments d'appui complémentaires, lorsque ladite première portion d'appui est éloignée de ladite face externe de ladite paroi latérale du fait de la pression exercée par un utilisateur sur ladite première extrémité de ladite tige de blocage.

Les moyens d'appui complémentaires permettent de renforcer le maintien de l'élément formant anneau, en position de travail.

D'autres particularités et avantages de l'invention ressortiront à la lecture de la description faite ci-après de deux modes de réalisation particuliers de l'invention, donnés à titre indicatif mais non limitatif, en référence aux dessins annexés sur lesquels :
- la Figure 1 représente une vue en perspective d'un premier mode de réalisation selon l'invention ;
- la Figure 2 une vue partielle, en coupe selon l'axe II du premier mode de réalisation ;
- la Figure 3 représente une vue partielle, en perspective d'un second mode de réalisation ; et
- la Figure 4 représente une vue en coupe selon l'axe IV-IV, d'un détail du second mode de réalisation.

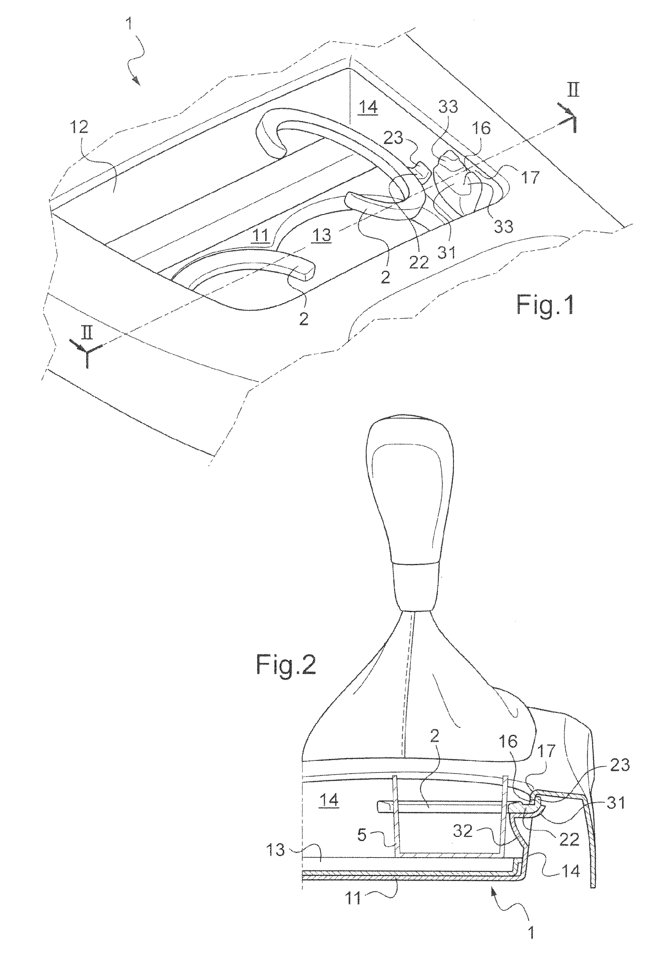

La Figure 1 représente un premier mode de réalisation du dispositif de l'invention. Le dispositif de l'invention comporte un réceptacle 1 qui est ménagé dans la console centrale d'un véhicule automobile. Le réceptacle 1 présente un fond 11, une ouverture d'accès 12 qui est parallèle et opposée au fond 11 et une paroi latérale 14 qui s'étend, verticalement, entre le fond 11 et l'ouverture d'accès 12. Le dispositif comporte également deux éléments formant anneaux 2 qui sont aptes, chacun, à supporter un récipient contenant une boisson (gobelet ou boite en métal). Sur la figure 1, un des éléments formant anneau 2 est en position de repos tandis que le second est en cours de mise en position de travail. Le fond 11 présente une cavité 13 de forme adaptée pour recevoir les anneaux 2, disposés côte à côte, à plat sur le fond 11. Lorsque les éléments formant anneau 2 sont dans leur position de repos, ils sont disposés dans la cavité 13 et de cette manière, affleurent au niveau du fond 11 du réceptacle. Les éléments formant anneau 2 sont formés d'un anneau ouvert ce qui permet de les disposer côté à côte, dans la cavité 13, sans perdre de place, les branches d'un élément s'insérant entre les branches de l'autre. La cavité 13 permet de maintenir les éléments formant anneaux 2 dans leur position de repos, lors du déplacement du véhicule automobile. Lorsque les éléments formant anneaux 2 sont dans leur position de repos, escamotés dans la cavité 13 du fond 11 du réceptacle 1, ce dernier peut être utilisé comme vide-poche, puisque tout le volume du réceptacle est libre et toute l'ouverture d'accès 12 est dégagée.

En référence aux figures 1 et 2, dans sa position de travail, l'élément formant anneau 2 est éloigné du fond 11 et est disposé dans un plan parallèle à ce dernier. Dans sa position de travail, l'élément formant anneau 2 est situé dans le réceptacle 1, entre le fond 11 et l'ouverture d'accès 12, ce qui rend la console compacte, même lors de l'utilisation du dispositif porte boisson. La paroi latérale 14 comporte deux rebords de soutien 31 qui sont disposés sur des faces opposées de la paroi latérale 14. Chaque rebord de soutien 31 s'étend selon un plan parallèle au fond 11. Ce rebord de soutien 31 est disposé légèrement en dessous de l'ouverture d'accès 12. Le rebord de soutien 31 forme une surface continue avec la paroi latérale 14, du fait de la présence d'une portion bombée 32 qui rejoint l'extrémité libre du rebord de soutien 31 (c'est-à-dire l'extrémité orientée vers le centre du réceptacle) à la portion de la paroi latérale située sous le rebord de soutien 31. La paroi latérale 14 comporte un orifice d'insertion, allongé, 16, ménagé au dessus du rebord de soutien 31. Ainsi, la petite portion 17 de paroi latérale 14 qui est disposée au-dessus de l'orifice 16 forme une butée de retenue. Le rebord de soutien 31 comporte également deux butées latérales 33 qui encadrent l'orifice 16 et qui sont disposées à une même hauteur sur la paroi latérale 14.

Comme représenté sur les figures 1 et 2, l'élément formant anneau 2 comporte une patte d'appui 22 qui s'étend dans le même plan que l'élément formant anneau 2 lui-même. Cette patte d'appui 22 prolonge l'élément formant anneau 2, selon un de ces diamètres et s'étend vers l'extérieur de l'élément formant anneau 2. L'extrémité libre de la patte d'appui 22 comporte un retour 23, sensiblement perpendiculaire à la patte d'appui 22. L'élément formant anneau 2 est amovible. Dans la position de travail, la patte d'appui 22 est disposée en appui sur le rebord de soutien 31. Le retour 23 est inséré dans l'orifice d'insertion 16 et vient se placer parallèlement à la paroi latérale 14, au niveau de la portion 17, du côté de la face externe (i.e. la face non visible de la paroi latérale 14 et qui n'est donc pas disposée à l'intérieur du réceptacle) de cette dernière. Le retour 23 qui vient en butée contre la face externe de la paroi latérale 14, empêche l'élément formant anneau 2 de glisser hors du trou 16, parallèlement au rebord de soutien 31, sous l'effet, notamment des vibrations occasionnées par le mouvement du véhicule. Les butées 33 permettent de bloquer la languette d'appui 22 en translation latérale, le long de la paroi latérale 14. Ces butées 33 peuvent également présenter un profil apte à servir de contre appui entre le retour 23 et la face externe 14, afin de participer au serrage de la languette d'appui 22 dans la paroi latérale 14.

Par ailleurs, si le récipient maintenu par l'élément formant anneau 2 ne touche pas le fond 11 du réceptacle, le poids de ce récipient pousse la languette de maintien 22 contre la butée 17 et, de ce fait, bloque l'élément formant anneau 2 dans sa position de travail.

L'utilisation de ce premier mode de réalisation va maintenant être expliqué en référence aux figures 1 et 2.

L'élément formant anneau 2 est amovible. Dans sa position de repos, l'élément formant anneau 2 est rangé sur le fond 11 du réceptacle 1, dans la cavité 13 précitée. Le fond 11 peut être recouvert d'un tapis souple qui permet à l'utilisateur, de par sa déformation élastique, de saisir facilement l'élément formant anneau 2, disposé dans la cavité 13. Le fond 11 peut également comporter une cavité secondaire, située au fond de la cavité 13 et qui permet à l'utilisateur de glisser son doigt sous l'élément formant anneau 2, lorsque ce dernier est dans sa position de repos.

Lorsque l'utilisateur veut se servir de l'élément formant anneau 2 pour maintenir un récipient 5, il retire l'élément formant anneau 2 de la cavité 13, ce qui peut se faire aisément, d'une seule main. Il vient ensuite introduire le retour 23 et une partie de la patte d'appui 22 dans l'orifice d'insertion 16 de la paroi latérale 14. En lâchant l'élément formant anneau 2, la patte d'appui 22 vient se placer en appui sur le rebord de soutien 31, du fait du poids de l'élément formant anneau 2. Dans le cas où le poids de l'élément formant anneau est trop faible pour qu'il se mette en place automatiquement, l'utilisateur pourra exercer une légère pression, du haut vers le bas. Le récipient 5 peut ensuite être inséré dans l'élément formant anneau 2 et posé sur le fond 11.

Selon une variante non représentée de ce premier mode de réalisation, le fond 11 ne comporte pas de cavité 13 et l'élément formant anneau 2 est posé sur le fond 11, dans sa position de repos.

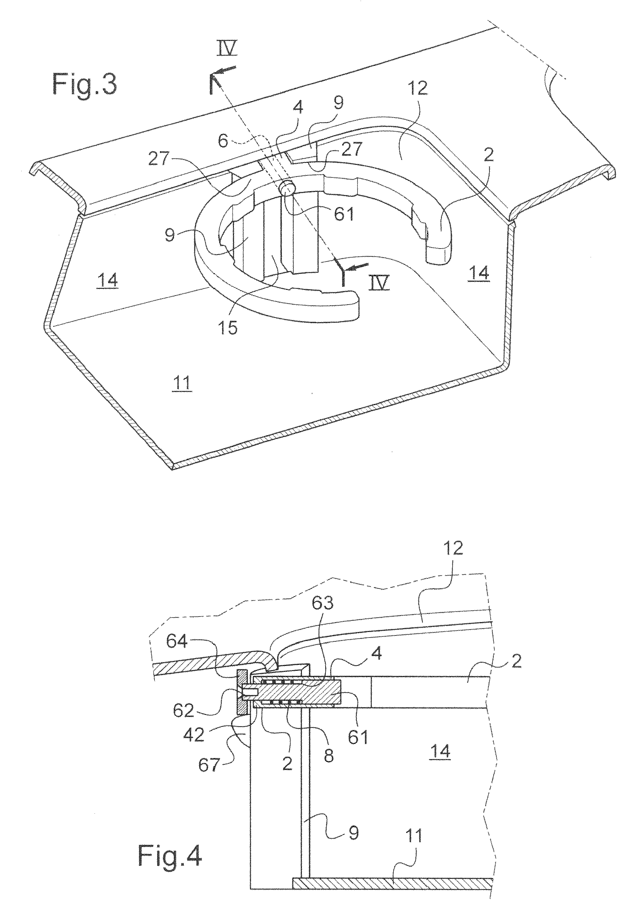

Un second mode de réalisation va maintenant être décrit en référence aux figures 3 et 4. Les éléments de ce second mode de réalisation qui sont en commun avec le premier mode de réalisation précédemment décrit sont référencés à l'identique.

Dans le second mode de réalisation, comme représenté sur la figure 3, le réceptacle 1 ne comporte qu'un seul élément formant anneau 2, qui est représenté en position de travail. Le fond 11 ne comporte pas de cavité. En position de repos, l'élément formant anneau 2 est donc posé sur le fond 11, ce qui permet d'utiliser le réceptacle 1, en tant que vide-poche, par exemple. La paroi latérale 14 comporte une fente verticale 15 qui s'étend du fond 11 jusqu'à l'ouverture d'accès 12. La fente 15 est encadrée selon sa longueur par deux guides longitudinaux 9. Ces guides 9 présentent, au niveau de leur face située dans le réceptacle 1, une forme courbe qui épouse la tranche de l'élément formant anneau 2. L'élément formant anneau 2 comporte une portion de guidage 4 qui est insérée dans la fente 15 et qui s'étend selon une direction perpendiculaire à la longueur de la fente 15. La portion de guidage 4 coulisse le long de la fente 15 en étant guidée par les guides 9. Une tige de blocage 6 est disposée dans la portion de guidage 4. Cette tige de blocage 6 est parallèle au plan de l'élément formant anneau 2 et comporte une première extrémité 61, visible au niveau de l'élément formant anneau 2. Cette première extrémité 61 dépasse de l'élément formant anneau 2 vers le centre de ce dernier.

Comme représenté sur la figure 4, la portion de guidage 4 comporte une cavité dans laquelle est insérée la tige de blocage 6. Cette cavité comporte une paroi d'extrémité 42 qui est traversée par la tige 6 et qui est disposée au-delà de la fente 15 et orientée vers la face externe paroi latérale 14. La tige 6 comporte un méplat annulaire 63 qui correspond à un changement de diamètre de la tige 6. Un ressort, du type spirale, 8 prend appui contre le méplat 63 et contre la paroi d'extrémité 42 et pousse ainsi la tige 6 vers le centre de l'élément formant anneau 2. Un élément formant la première portion d'appui 64 est fixé sur la seconde extrémité 62 de la tige 6. Cette première portion d'appui 64 est une portion sensiblement en forme de barre, perpendiculaire à la longueur de la fente 15. Du fait de la présence du ressort 8, la première portion d'appui 64 vient toujours en appui contre la face externe de la paroi latérale 14, de part et d'autre de la fente 15. Des paires d'éléments d'appui complémentaires 67 sont disposées sur la face externe de la paroi latérale 14. Les éléments d'appui complémentaires 67 d'une paire sont disposés à la même hauteur, le long de la fente 15 et de part et d'autre de celle-ci. Ces éléments d'appui complémentaires 67 coopèrent avec la première portion d'appui 64 pour le maintien et le blocage de l'élément formant anneau 2 en position de travail. L'élément formant anneau 2 présente une seconde portion d'appui 27 (voir figure 3) qui est disposée de part et d'autre de la portion de guidage 4 et qui prend appui contre les guides 9.

Dans sa position de repos, l'élément formant anneau 2 est escamoté sur le fond 11 du réceptacle 1. Lorsque l'utilisateur veut utiliser l'élément formant anneau 2, il appui sur la première extrémité 61 de la tige 6. Ce faisant, le ressort 8 est comprimé et la première portion d'appui 64 est éloignée de la face externe de la paroi latérale 14. L'élément formant anneau 2 peut donc coulisser le long de la fente 15. L'utilisateur remonte donc l'élément formant anneau 2 le long de la fente 15 vers l'ouverture d'accès 12. Lorsque l'utilisateur relâche la pression sur la tige 6, la première portion d'appui 64 revient au contact de la face externe de la paroi latérale 14, et se bloque en position lorsqu'elle prend appui sur une paire d'éléments d'appui complémentaires 67. Les éléments d'appui complémentaires 67 sont dimensionnés pour que, lorsque la première portion d'appui 64 est éloignée de la paroi latérale 14, elle puisse passer par dessus ces éléments d'appui complémentaires 67, tant que l'utilisateur maintient la pression sur la première extrémité 61 de la tige 6. En position de travail, la paroi latérale 14 est donc pincée entre la première portion d'appui 64 et la seconde portion d'appui 27, par l'intermédiaire des guides 9 qui sont fixés sur la paroi latérale 14 ; l'élément formant anneau 2 est ainsi maintenu par frottements contre les guides 9. Ces frottements peuvent suffire à son maintien en position de travail. Néanmoins, la présence des éléments d'appui complémentaires 67 précités, permet de renforcer le blocage de l'élément formant anneau 2, en position de travail.

## Revendications

1. Dispositif porte-boisson pour console de véhicule automobile, ledit dispositif porte-boisson comportant :
- un réceptacle (1) ménagé dans ladite console et présentant un fond (11) et une ouverture d'accès (12), opposée audit fond (11) et qui permet l'introduction d'un récipient (5) contenant une boisson ;
- au moins un élément formant anneau (2), apte à entourer ledit récipient (5), ledit élément formant anneau (2) étant destiné à être porté d'une position de repos vers une position de travail dans laquelle il surplombe ledit fond (11), de manière à recevoir ledit récipient (5) pour maintenir ledit récipient (5) en appui sur ledit fond (11) ;
**caractérisé en ce que** ledit élément formant anneau (2) est escamoté au niveau dudit fond (11), dans ladite position de repos.

2. Dispositif selon la revendication 1, **caractérisé en ce que** ledit élément formant anneau (2) est amovible et **en ce que** ledit réceptacle (1) présente une paroi latérale (14) qui comporte :
- un rebord de soutien (31) qui s'étend depuis ladite paroi latérale (14) vers le centre dudit réceptacle (1) ;
- un orifice d'insertion (16), ménagé au dessus dudit rebord de soutien (31) ; et
- une languette d'appui (22), solidaire dudit élément formant anneau (2) et qui comporte un retour (23), sensiblement perpendiculaire à ladite languette (22) ;
et **en ce que** dans ladite position de travail, ledit retour (23) est disposé au-delà dudit orifice d'insertion (16) et ladite languette d'appui (22) prend appui sur ledit rebord de soutien (31).

3. Dispositif selon la revendication 1, **caractérisé en ce que** ledit réceptacle (1) comporte :
- une paroi latérale (14) qui présente une face externe et dans laquelle est ménagée une fente (15) qui s'étend depuis ledit fond ; et
**en ce que** ledit dispositif comporte en outre,
- une tige de blocage (6), montée sur ledit élément formant anneau (2) et traversant ladite fente (15), ladite tige de blocage (6) présentant une première extrémité (61) dépassant dudit élément formant anneau (2) et orientée vers le centre dudit élément formant anneau (2) et une seconde extrémité (62), disposée au-delà de ladite fente (15), ladite seconde extrémité (62) comportant une première portion d'appui (64) qui prend appui sur ladite face externe de ladite paroi latérale (14), de part et d'autre de ladite fente (15);
- des moyens élastiques (8) qui maintiennent ladite première portion d'appui (64) contre ladite face externe ; et
- une seconde portion d'appui (27), disposée sur ledit élément formant anneau (2) de manière à pincer ladite paroi latérale (14) entre ladite première et ladite seconde portion d'appui (64 ; 27), moyennant quoi, ledit élément formant anneau (2) est maintenu dans ladite position de travail par frottements.

4. Dispositif selon la revendication 3, **caractérisé en ce qu'**il comporte des moyens de guidage dudit élément formant anneau (2) le long de ladite fente (15).

5. Dispositif selon la revendication 4, **caractérisé en ce que** lesdits moyens de guidage comportent deux guides longitudinaux (9), disposés l'un de chaque côté de ladite fente (15) et un élément de guidage (4), solidaire dudit élément formant anneau (2), traversé par ladite tige de blocage (6) et qui coulisse entre lesdits guides (9).

6. Dispositif selon l'une quelconque des revendications 3 à 5, **caractérisé en ce que** ladite face externe de ladite paroi latérale (14) comporte au moins une paire d'éléments d'appui complémentaires (67) qui sont disposés de part et d'autre de ladite fente (15) et sur lesquels ladite première portion d'appui (64) prend appui dans ladite position de travail, lesdits éléments d'appui complémentaires (67) étant conformés de manière à permettre le passage de ladite première portion d'appui (64), au-dessus desdits éléments d'appui complémentaires (67), lorsque ladite première portion d'appui (64) est éloignée de ladite face externe de ladite paroi latérale (14) du fait de la pression exercée par un utilisateur sur ladite première extrémité (61) de ladite tige de blocage (6).
